# EUROPÄISCHE PATENTSCHRIFT

(11) **EP 1 073 523 B1**
(45) Veröffentlichungstag und Bekanntmachung des Hinweises auf die Patenterteilung: **20.03.2002**
(21) Anmeldenummer: 99920699.8
(22) Anmeldetag: 19.04.1999
(51) Int. Cl.: B02C 4/10

(54) **VERFAHREN UND VORRICHTUNG ZUR FEINZERKLEINERUNG VON MINERALISCHEN UND NICHTMINERALISCHEN STOFFEN**
METHOD AND DEVICE FOR FINE GRINDING MINERAL AND NON-MINERAL SUBSTANCES
PROCEDE ET DISPOSITIF DE BROYAGE FIN DE SUBSTANCES MINERALES ET NON MINERALES

(30) Priorität: 18.04.1998 DE 19817274
(43) Veröffentlichungstag der Anmeldung: 07.02.2001
(73) Patentinhaber: Cemag GmbH, 31789 Hameln (DE)
(72) Erfinder: FEIGE, Fritz, D-06862 Rosslau (DE)
(74) Vertreter: Gritschneder, Martin, Dipl.-Phys.
(86) Internationale Anmeldenummer: EP9902606
(87) Internationale Veröffentlichungsnummer: WO9954044

(56) Entgegenhaltungen:
- EP-A- 0 070 547
- EP-A- 0 610 573
- DE-A- 3 732 723
- GB-A- 448 960

## Beschreibung

Die Erfindung betrifft ein Verfahren (Ansprüche 1-8) und die dazugehörige Vorrichtung (Ansprüche 9-15) zur Feinzerkleinerung von mineralischen und nichtmineralischen Stoffen, vorzugsweise Zementrohstoffen und Zementklinker, durch ein- oder mehrmalige Druckbeanspruchung unter Anwendung mittlerer bis hoher Drücke (60 bis 300 bar/6 bis 30 MPa) mit anschließender Desagglomeration des erzeugten Mahlgutes auf der gleichen Vorrichtung, entsprechend dem jeweiligen Oberbegriff der Ansprüche 1 bzw. 9, der dem Stand der Technik aus GB-A-448 960 entspricht.

Die Feinzerkleinerung von mineralischen und nichtmineralischen Stoffen, wie z.B. von Zementrohstoffen oder Zementklinkern, erfolgt üblicherweise in Rohrkugel- sowie Wälzmühlen und neuerdings auch in Hochdruck-Rollenmühlen. Obwohl die Hochdruck-Rollenmühle wegen ihrer besseren Energieausnutzung die Rohrmühle in den letzten Jahren zurückgedrängt hat, ist diese Mühle, in der die Beanspruchung des Materials unter Anwendung von hohen bis hin zu sehr hohen Druckkräften erfolgt, noch verbesserungsfähig.

Die Druckzerkleinerung von Gutschichten in einer Hochdruck-Rollenmühle, nach DE-B2-27 08 053 als Gutbett-Walzenmühle bezeichnet und im wesentlichen dadurch charakterisiert, daß die Zerkleinerung durch eine einmalige Druckbeanspruchung zwischen zwei Flächen bei Drücken weit über 50 MPa im Spalt von zwei gegenläufig angetriebenen zylindrischen Walzen erfolgt, besitzt entscheidende Nachteile.

Erstens arbeitet die Hochdruck-Rollenmühle mit sehr hohen Drücken, d.h. mit bezogenen Preßkräften zwischen 10 bis 20 kN/mm Beanspruchungsbreite, die um ein Vielfaches höher liegen als bei anderen unter Anwendung von Druckmechanismen arbeitenden Zerkleinerungsmaschinen. Diese Preßkräfte sind in ihrer Größe nur bedingt einstellbar, da die Mühle aus Schwingungsgründen immer im Grenzbereich ihrer Beaufschlagung über einen füllstandgesteuerten Materialbunker, vergleichbar mit dem Betrieb einer Kompaktierpresse, betrieben werden muß. Der Betrieb der Mühle in diesem Grenzbereich ist materialabhängig bereits durch eine beginnende Konsolidierung der beanspruchten Gutschicht und durch eine überproportional hohe Energieaufnahme im Verhältnis zur Feinguterzeugung gekennzeichnet, die im allgemeinen bis zu Drücken um 50 MPa linear ansteigt, jedoch bei weiterer Beanspruchung zum Stillstand kommt. Die Anwendung von hohen bis bis sehr hohen Preßkräften führt zu einer sehr schweren Maschinenkonstruktion und einer kostenaufwendigen Wälzlagerung mit komplizierter Lagerschmierung und Lagerkühlung. Drehmomentspitzen, hervorgerufen durch Fremdkörper, durch Schrägstellung der beweglichen Rolle oder durch Entlüftungsprobleme, können zu schweren Schäden auf den gepanzerten Beanspruchungsflächen der Rollen, an Lagern, Übertragungselementen und Getrieben führen. Problematisch ist auch der Verschleiß der Beanspruchungsflächen, die in Abhängigkeit von der Abrasivität des Mahlgutes oftmals nur Standzeiten von 5000 Betriebsstunden erreichen.

Zweitens besitzt die Hochdruck-Rollenmühle ein ungünstiges Durchsatz-Geschwindigkeitsverhalten. Die Durchsatzkennlinie einer durch einen Aufgabebunker beschickten Rollenpaarung ist nichtlinear, d.h. in Abhängigkeit von den Materialeigenschaften sowie von der Geometrie der Beanspruchungsflächen kann der Durchsatz mit zunehmender Umfangsgeschwindigkeit bis zu 50% zurückgehen. Außerdem ist der aufgesetzte Materialbunker nicht in der Lage, das Frischgut mit dem Umlaufgut zu mischen und im Massefluß dem Rollenspalt zuzuführen, d.h. die Beaufschlagung des Rollenspaltes erfolgt keineswegs definiert. Aufgrund dieses Tatbestandes und mit Rücksicht auf das Schwingungsverhalten der Mühle, das auch sehr stark von der Korngrößenzusammensetzung des Aufgabegutes abhängt und mit wachsender Geschwindigkeit sich verschlechtert, liegen die praktisch realisierbaren Umfangsgeschwindigkeiten einer Hochdruck-Rollenmühle im allgemeinen nur zwischen 1,0 bis 1,8 m/s. Damit bleibt der Durchsatz einer Hochdruck-Rollenmühle begrenzt. Große Durchsätze sind demzufolge nur über die Verbreiterung der Mahlrollen bei proportionaler Zunahme der Preßkräfte möglich, was jedoch maschinentechnisch begrenzt ist.

Drittens führt die Hochdruck-Rollenmühle innerhalb einer Zerkleinerungsanlage immer zu einer mehrstufigen Technologie, da sie bei den meisten Anwendungen nur vormahlt und über äußere Transportwege mit entsprechenden Einrichtungen zur Desagglomeration, zur Sichtung, Fertigmahlung und Trocknung des Mahlgutes geschaltet werden muß. Die maschinentechnischen, bau- und steuerungstechnischen Aufwendungen für eine Mahlanlage mit Hochdruck-Rollenmühle liegen deshalb im allgemeinen nicht niedriger als beim Einsatz anderer Mühlen. (Feige, F.: Entwicklungsstand der Hochdruckzerkleinerung, ZKG INTERNATIONAL 46 (1993) Heft 9, S. 586 - 595).

Aufgabe der Erfindung ist es, eine entsprechende Zerkleinerungsvorrichtung zur Verfügung zu stellen, die geeignet ist mineralogische und nichtmineralogische Stoffe durch Druckbeanspruchung in einer oder mehreren Beanspruchungsstufen mit anschließender Desagglomeration bei niedrigem maschinellen Aufwand zu zerkleinern, und bei vergleichsweise hoher Energieausnutzung angemessene Massendurchsätze zu realisieren.

Diese Aufgabe wird gemäß der Erfindung verfahrensmäßig mit den Maßnahmen nach Anspruch 1 und vorrichtungsmäßig mit den Maßnahmen nach Anspruch 9 gelöst. Vorteilhafte Ausgestaltungen der Erfindung sind in den Unteransprüchen angegeben.

Erfindungsgemäß wird das in der Regel aus Frisch- und Umlaufgut bestehende Mahlgut aus einem Aufgabebunker durch eine als Plattenband ausgebildete Mahlbahn vorzugsweise gravimetrisch dosiert abgezogen, als definierte Gutschicht durch eine hydropneumatisch angestellte Druckrolle beansprucht und anschließend im Abwurfbereich des Antriebsturas durch ein schnellaufendes Schlagwerk desagglomeriert. Durch Anordnung eines Prallrotors zwischen Aufgabebunker und Druckrolle kann auch eine Vorzerkleinerung oder durch eine zweite Druckrolle, z.B. anstelle des Prallrotors, auch eine Vorbeanspruchung oder Vorverdichtung der Gutschicht erfolgen. Die Vorverdichtung, die immer mit einer Entlüftung der Gutschicht verbunden ist, kann auch dazu benutzt werden, um das Material unter Anwendung entsprechend hoher Drücke in dem sich aus Plattenband und Druckrolle bildenden Spalt zu kompaktieren. Auf einen Desagglomerator kann dann verzichtet werden, wenn die Zerkleinerungsvorrichtung nicht im Kreislauf mit einem Sichter arbeitet und die Fertigzerkleinerung etwa in einer nachgeschalteten Rohrmühle erfolgt.

Die erfindungsgemäße Vorrichtung besteht aus einer elastisch angestellten Druckrolle, die vorzugsweise senkrecht über dem ebenfalls rollenförmig ausgebildeten Antriebsturas des endlosen Plattenbandes angeordnet ist, so daß zwischen der Druckrolle und dem Plattenband ein einstellbarer Spalt entsteht, in welchem die Zerkleinerung der auf dem Plattenband befindlichen Gutschicht mit anschließender Desagglomeration durch einen vorzugsweise um 90° versetzt in Drehrichtung des Antriebsturas angeordneten Schlagrotors erfolgt.

Die erfindungsgemäße Lösung, die diese Merkmale realisiert, besitzt zahlreiche Vorteile gegenüber einer Hochdruck-Rollenmühle. Die Vorteile der neuen Zerkleinerungsvorrichtung, die hinsichtlich ihres Aufbaus und ihrer Arbeitsweise als Band-Rollenmühle bezeichnet werden soll, bestehen verfahrenstechnisch gesehen darin, daß die angewendeten Preßdrücke frei einstellbar sind, wesentlich unterhalb der bei Hochdruck-Rollenmühlen angewendeten Drücke liegen und die Beanspruchung der Gutschicht im Kompressionsbereich erfolgt. Bei der erfindungsgemäßen Zerkleinerungsvorrichtung werden Drücke von 6 bis 30 MPa angewendet. Bei Kalkstein der Körnung K₈₀ ≤ 40 mm und einer Härte von 3,5 bis 3,8 Mohs werden z.B. im allgemeinen Drücke von 6 bis 9 MPa angewendet. Mahlbahngeschwindigkeit und Durchsatz werden weder durch den Einfluß von Massekräftern, noch durch die Zusammensetzung des Mahlgutes oder durch Entlüftungsprobleme begrenzt, so daß der bestehende lineare Zusammenhang zwischen Durchsatz und Mahlbahngeschwindigkeit in einem weiten Geschwingdigkeitsbereich vorteilhaft zur Durchsatzregelung ausgenutzt werden kann. Mit der umlaufenden Mahlbahn, die wie ein Plattenband ausgeführt ist, können kombiniert solche verfahrenstechnischen Operationen wie der Bunkerabzug, die Dosierung, Trocknungs- oder Befeuchtungsprozesse, die Vor- und Feinzerkleinerung mit anschließender Desagglomeration ohne zwischengeschaltete Transporteinrichtungen in einer einzigen Vorrichtung durchgeführt werden. Der dosierte Abzug des Mahlgutes aus dem Aufgabebunker als definierte Gutschicht und seine kontinuierliche Zuführung zur Mahlrolle führen zu idealen Beanspruchungsbedingungen, verbessern den Materialeinzug und liefern optimale Voraussetzungen zur Realisierung des Schleppantriebes, d.h. zur antriebslosen Mitnahme der Druckrolle durch den Kontakt mit dem gutbeladenen Plattenband.

Die maschinentechnischen Vorteile der Band-Rollenmühle bestehen darin, daß sie reparatur- und wartungsfreundlich ist, alle Verschleißteile leicht zugänglich und austauschbar sind und aus der Anwendung niedriger Preßkräfte und determinierter Bewegungsabläufe für alle Verschleißteile längere Standzeiten erwartet werden können. Außerdem stellt der Antrieb der umlaufenden Beanspruchungsbahn keine besonderen technischen Anforderungen. Für sehr hohe Leistungen kann er auch als Doppelantrieb ausgeführt werden. Die Band-Rollenmühle kann sowohl mechanisch als auch pneumatisch mit einem oder mehreren Sichtern im Kreislauf geschaltet werden oder auch unter Verzicht auf einen Desagglomerator vorteilhaft nur für die Vormahlung eingesetzt werden. Unter Ausnutzung der modularen Eigenschaften der Band-Rollenmühle können große Massedurchsätze durch Parallelaufstellung, durch eine Art Boxer- oder rotationssymmetrische Anordnung von zwei, drei oder vier Vorrichtungen realisiert werden.

Die Erfindung wird anhand von Ausführungsbeispielen näher erläutert. Die dazugehörigen Zeichnungen zeigen:
- Fig. 1:: eine Seitenansicht der erfindungsgemäßen Vorrichtung;
- Fig. 2:: eine Zusammenstellung über die realisierbaren Verfahrensschritte;
- Fig. 3:: eine Variante der erfindungsgemäßen Vorrichtung in Kreislaufschaltung mit einem Sichter;
- Fig. 4:: eine Variante der erfindungsgemäßen Vorrichtung in Parallelaufstellung;
- Fig. 5:: eine weitere Variante der erfindungsgemäßen Vorrichtung als Vormühle vor einer Rohrkugelmühle;
- Fig. 6:: eine Einzelheit der erfindungsgemäßen Vorrichtung in Schnittdarstellung;
- Fig. 7:: die Seitenansicht nach Figur 6;
- Fig. 8:: eine Variante nach Figur 6;
- Fig. 9:: die Seitenansicht nach Figur 8;
- Fig. 10:: eine weitere Variante nach Figur 6;
- Fig. 11:: die Seitenansicht nach Figur 10.

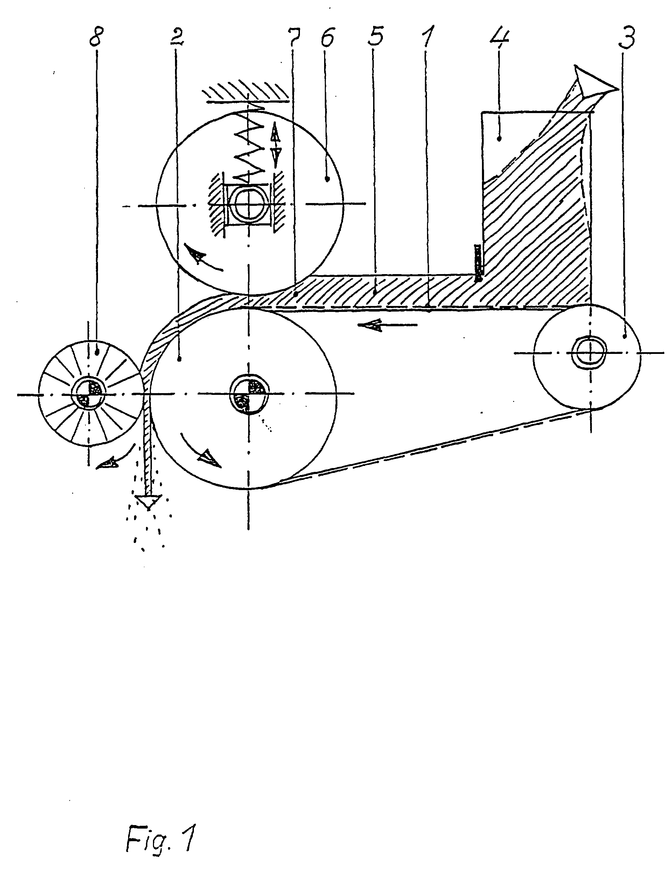

Figur 1 zeigt die erfindungsgemäße Band-Rollenmühle, dargestellt mit einem Desagglomerator 8. Die Mahlbahn, als endloses Plattenband 1 ausgebildet und mittels einer ein- oder zwei- strängigen Laschenkette 23 über den Antriebsturas 2 und den Umlenkturas 3 mit einer vorzugsweise stufenlos einstellbaren Geschwindigkeit gezogen, wird durch einen Aufgabebunker 4 dosiert beschickt. Das als definierte Gutschicht 5 auf der bewegten Mahlbahn ausgebreitete Mahlgut gelangt dann in den durch Mahlbahn und Druck- bzw. Mahlrolle 6 gebildeten Beanspruchungsspalt 7. Die elastisch auf die Gutschicht angestellte Druckrolle 6 besitzt vorzugsweise keinen eigenen Antrieb, sondern wird durch den Reibschluß der bewegten Gutschicht geschleppt. Anschließend wird das beanspruchte Mahlgut durch einen Desagglomerator 8, beispielsweise durch ein schnellaufendes Schlagwerk, desagglomeriert und nach unten abgeworfen. Die Drehrichtung des Schlagrotors, der vorzugsweise mit einer höheren Umfangsgeschwindigkeit als das Plattenband betrieben wird, kann dabei auch gegenläufig zur Bewegungsrichtung des Plattenbandes sein.

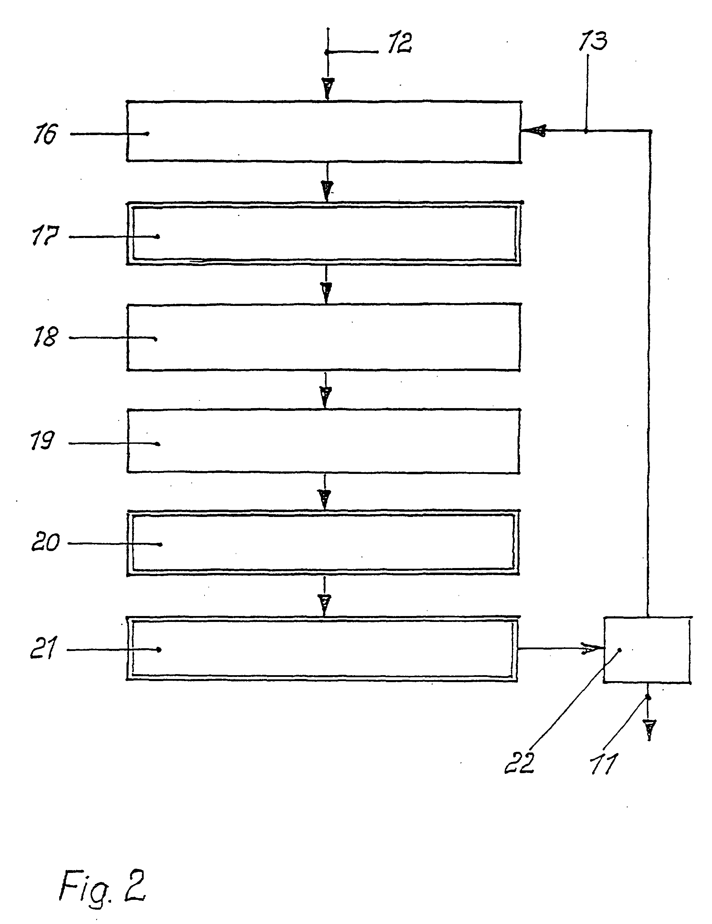

Figur 2 zeigt in schematischer Darstellung die einzelnen Verfahrensschritte, die mit der Band-Rollenmühle realisiert werden können. Mit einem einfachen Kasten sind dabei die verfahrenstechnischen Nebenoperationen, mit einem Doppelkasten die verfahrenstechnischen Hauptoperationen charakterisiert. Je nach der zu lösenden Zerkleinerungsaufgabe können durch die Band-Rollenmühle drei, maximal sogar bis zu sechs Verfahrensschritte realisiert werden. Dadurch bietet die neue Zerkleinerungsvorrichtung gute Voraussetzungen für ihre Integration in eine komplette Anlage. Der Aufgabebunker, der in Verbindung mit der umlaufenden Mahlbahn die Dosierung, vorzugsweise eine gravimetrische Dosierung und den Gutschichtaufbau 17 übernimmt, kann gleichzeitig auch die Funktion eines Bunkerverschlusses und -abzuges 16 erfüllen. Wenn das zugeführte Frischgut 12 sehr grobkörnig ist, kann unmittelbar nach dem Aufgabebunker auch eine Vorzerkleinerung 18 mittels eines schnellaufenden Prallrotors erfolgen. Die Vorzerkleinerung 18 kann aber auch in einer Vorkompression der Gutschicht durch eine elastisch angestellte Druckrolle bestehen. In einem weiteren Verfahrensschritt 19 kann dann das Mahlgut an seiner Oberfläche getrocknet, von Fremdkörpern befreit oder etwa mit einem geeigneten Mahlhilfsmittel, z.B. mit Wasser, für die weiter Zerkleinerung vorbehandelt werden. In der nächsten Verfahrenstufe erfolgt die Feinzerkleinerung 20, d.h. die mittels einer elastisch auf die Gutschicht angestellten Mahlrolle mit dem Ziel, einen großen Fertiggutanteil, z.B. als D90-Durchgang ausgedrückt, zu erzeugen. In der sich anschließenden letzten Verfahrensstufe wird das mehr oder weniger nach der Druckbeanspruchung brikettiert anfallende Mahlgut durch ein schnellaufendes Schlagwerk desagglomeriert 21 und von der Mahlbahn abgeworfen. Je nach der zu lösenden Zerkleinerungsaufgabe kann die Band-Rollenmühle auch mit einem Sichter 22 über einen mechanischen oder pneumatischen Guttransport im Kreislauf geschaltet sein. Das Fertiggut 11 wird über die Fertiggutabführung aus dem System ausgetragen, während das Umlaufgut im Kreislauf 13 der Mühle wieder zugeführt wird.

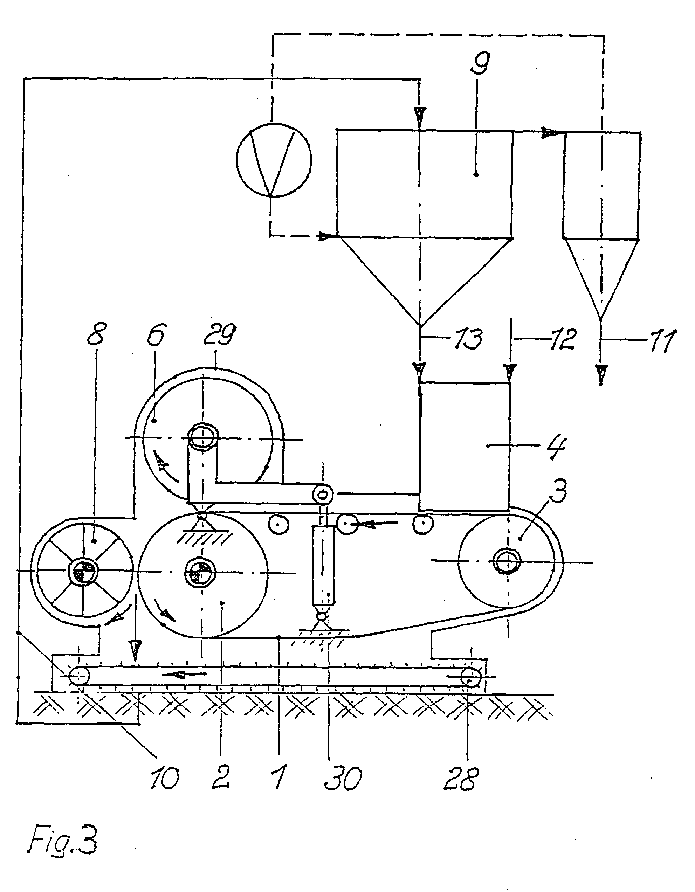

Figur 3 zeigt die Band-Rollenmühle im Zusammenwirken mit einer hydropneumatischen Anpreßvorrichtung 30 für die Druckrolle 6, einem als Schlagrotor ausgebildeten Desagglomerafcor 8 und einem im Kreislauf geschalteten Sichter 9, der entweder mechanisch oder pneumatisch über den Materialweg 10 beschickt wird. Das im Sichter 9 abgeschiedene grobkörnige Material wird als Umlaufgut dem Aufgabebunker 4 und somit dem Mahlprozeß wieder zugeführt. Das Fertiggut 11 wird nach der Trennung vom Gasstrom aus dem System ausgetragen. Die erfindungsgemäße Band-Rollenmühle ist von einem nichttragenden Gehäuse 29 umgeben, in dem aufklappbare Bereiche als Zugang zum Plattenband 1, zur Druckrolle 6, zum Antriebsturas 2 und Umlenkturas 3 sowie zum Desagglomerator 8 angeordnet sind. Zum Abtransport des zerkleinerten Materials ist unter dem Untertrum des umlaufenden Plattenbandes ein Stetigförderer, vorzugsweise ein Panzerkettenförderer 28, angeordnet.

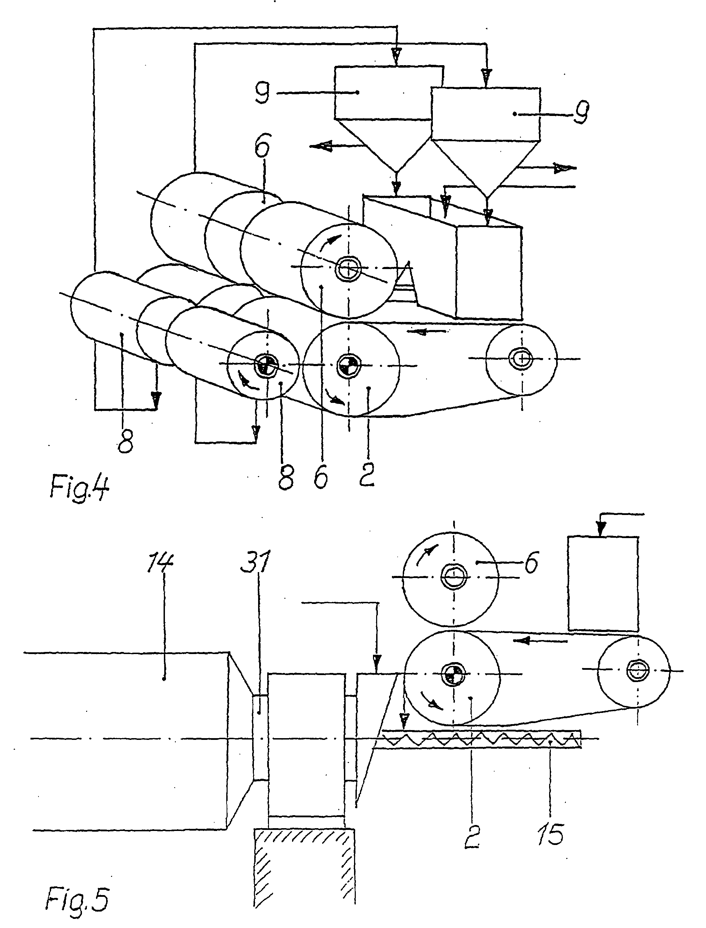

Figur 4 zeigt beispielhaft die parallele Aufstellung von zwei Band-Rollenmühlen in Kreislaufschaltung jeweils mit einem Sichter 9. Diese modulare Anordnung von zwei komplett ausgerüsteten Mahlanlageneinheiten ist sehr gut geeignet zur Realisierung von besonders großen Durchsätzen. Außerdem hat diese Anordnung gegenüber einer einzigen großen Einheit Vorteile für den Teillastbetrieb und für eine beliebige modulare Kapazitätserweiterung unter Einsatz gleicher maschinentechnischer Komponenten. Eine große Mahlanlage, die sich aus zwei parallel geschalteten Einheiten zusammensetzt, steht selbst bei außergewöhnlichen Situationen noch mit einer 50%igen Betriebsbereitschaft zur Verfügung. Desweiteren besitzt eine derartige Anlagenkonfiguration günstige Reparatur- und Instandhaltungseigenschaften.

Auf Figur 5 ist eine Gutschicht-Bandrollenmühle dargestellt, die als Vormühle mit einer Rohrkugelmühle 14 im Verbund arbeitet. Da bei dieser Anlagenschaltung die Rohrkugelmühle als Fertigmühle fungiert, entfällt der Desagglomerator. Das in der Vormühle vorgemahlene Mahlgut wird im dargestellten Beispiel ohne Zwischensichtung durch einen durch Rohrschneckenförderer 15 über den Halslagerzapfen 31 der Rohrkugelmühle 14 aufgegeben.

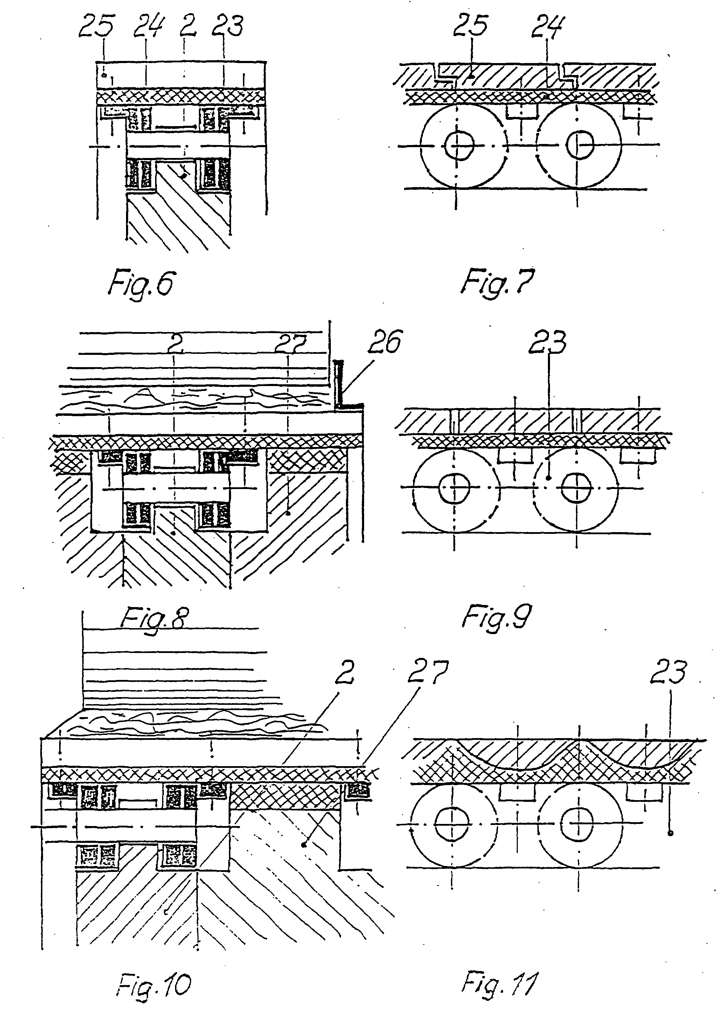

Die Figuren 6 bis 11 zeigen mehrere Ausführungsbeispiele zu Antriebsturas und Beanspruchungsbahn in Schnittdarstellungen und Seitenansichten:

Figuren 6 und 7 zeigen einen verzahnten Antriebsturas 2, der eine Laschenkette 23 zieht, auf der Panzerplatten 25 aufgeschraubt sind. Zwischen Laschenkette 23 und aufgeschraubten Panzerplatten 25 befindet sich ein stahlseilverstärkter Gummigurt 24, der den Materialdurchfall verhindern soll. Die Laschenkette 23 kann beispielsweise eine handelsübliche Raupenkette sein.

Figuren 8 und 9 zeigen eine Ausführung, bei der sich das Plattenband beiderseits der Zentralkette auf gummierten Rollenkörpern 27 abstützt. Zur seitlichen Begrenzung der Gutschicht können auf den Panzerplatten Winkel 26 angeordnet sein.

Figuren 10 und 11 zeigen eine besonders schwere Ausführung unter Verwendung von zwei Laschenketten 23. Bei dieser Ausführung stützt sich das Plattenband 1 an den Rändern auf die beiden Antriebsturasse 2 ab und im Mittenbereich auf einen gummierten Rollenkörper 27. Die in ihrem Querschnitt besonders ausgebildeten Panzerplatten 25 können nach Figur 11 auf dem untergelegten Gummi auch aufvulkanisiert und mit der Laschenkette 23 entsprechend verschraubt sein.

### Liste der Bezugszeichen

- 1: Plattenband
- 2: Antriebsturas
- 3: Umlenkturas
- 4: Aufgabebunker
- 5: Gutschicht
- 6: Druckrolle
- 7: Spalt
- 8: Desagglomerator
- 9: Sichter
- 10: Materialweg
- 11: Fertiggutabführung
- 12: Frischgutzuführung
- 13: Umlaufgutzuführung
- 14: Rohrkugelmühle
- 15: Rohrschneckenförderer
- 16: Bunkerverschließen und Gutabziehen
- 17: Dosieren und Gutschichtaufbau
- 18: Vorzerkleinern und/oder Verdichten und Gutschichtaufbau
- 19: Mischen, Trocknen, Befeuchten und Fremdkörperbeseitigung
- 20: Feinzerkleinerung
- 21: Desagglomerieren
- 22: Sichten
- 23: Laschenkette
- 24: Gummigurt
- 25: Panzerplatte
- 26: Winkel
- 27: Rollenkörper
- 28: Panzerkettenförderer
- 29: Gehäuse
- 30: Hydropreumatische Anpressvorrichtung

## Patentansprüche

1. Verfahren zur Feinzerkleinerung von mineralischen und nichtmineralischen Stoffen, vorzugsweise Zementrobstoffen und Zementklinker, wobei die Zerkleinerung in dem sich ausbildenden Spalt (7) zwischen einem endlosen, gleichförmig bewegten Plattenband (1) und einer über der Gutschicht (5) angeordneten Druckrolle (6) durch ein- oder mehrmalige Druckbeanspruchung erfolgt und wobei das gutbeladene Plattenband (1) horizontal oder leicht zur Druckrolle (6) hin geneigt angeordnet ist, **dadurch gekennzeichnet,**
- **daß** das Plattenband (1) kontinuierlich mit einer definierten Gutschicht (5) dosiert belegt wird;
- **daß** die Gutschicht durch Verändern der Geschwindigkeit des Plattenbandes (1) gravimetrisch dosierbar ist;
- **daß** die Druckrolle (6) durch hydro-pneumatische Anpreßkräfte auf die Gutschicht (5) elastisch angestellt wird und
- **daß** die Zerkleinerung unter Anwendung mittlerer bis hoher Drücke (6 bis 30 MPa) erfolgt.

2. Verfahren nach Anspruch 1, **dadurch gekennzeichnet, daß** das erzeugte Mahlgut anschließend desagglomeriert wird, wobei die Desagglomeration des erzeugten Mahlgutes unmittelbar nach dem Zerkleinerungsvorgang auf der gleichen Vorrichtung durch einen zum gutbeladenen Plattenband (1) vorzugsweise gegenläufig und mit höherer Geschwindigkeit betriebenen Desagglomerator (8) durchgeführt wird.

3. Verfahren nach Anspruch 1, **dadurch gekennzeichnet, daß** die Fertigzerkleinerung in einer nachgeschalteten Rohrmühle erfolgt.

4. Verfahren nach einem der Ansprüche 1 bis 3, **dadurch gekennzeichnet, daß** die Zerkleinerung der auf dem bewegten Plattenband (1) befindlichen Gutschicht durch mehrere, z.B. zwei, in Materialtransportrichtung hintereinander geschaltete und mit vorzugsweise unterschiedlicher Anpreßkraft auf die Gutschicht (5) elastisch angestellte Druckrollen (6) erfolgt.

5. Verfahren nach Anspruch 1 und 4, **dadurch gekennzeichnet, daß** die Geschwindigkeit des Plattenbandes (1) stufenlos einstellbar ist.

6. Verfahren nach Anspruch 1 bis 5, **dadurch gekennzeichnet, daß** die Gutbeaufschlagung des Plattenbandes (1) mit in der Regel Frisch- und Umlaufgut vorzugsweise über einen Aufgabebunker (4) erfolgt, der entweder fü1lstandgesteuer von außen oder aus einem darüber befindlichen Silo gespeist wird.

7. Verfahren nach Anspruch 1 bis 6, **dadurch gekennzeichnet, daß** die auf die bewegte Gutschicht (5) angestellte Druckrolle (6) vorzugsweise keinen eigenen Antrieb besitzt und durch den Reibschluß mit der Gutschicht (5) geschleppt wird.

8. Verfahren nach Anspruch 1 bis 7, **dadurch gekennzeichnet, daß** die auf dem bewegten Plattenband (1) befindliche Gutschicht (5) durch eine oder mehrere Druckrollen vorverdichtet und entlüftet und anschließend durch Druckrolle (6) kompaktiert wird.

9. Vorrichtung zur Durchführung des Verfahrens nach einem der Ansprüche 1 bis 8, mit einem endlosen, mittels eines Antriebsturas (2) gleichförmig bewegten Plattenband (1) und mit einer über der Gutschicht (5) angeordneten Druckrolle (6), wobei das gutbeladene Plattenband (1) horizontal oder leicht zur Druckrolle (6) hin geneigt angeordnet ist, **dadurch gekennzeichnet:**
- **daß** ein Aufgabebunker (4) zu dosierten, kontinuierlichen Beschickung des Plattenbandes (1) mit einer definierten Gutschicht (5) vorgesehen ist;
- **daß** die Druckrolle (6) auf die Gutschicht (5) elastisch angestellt wird und senkrecht über dem rollenförmig ausgebildeten Antriebsturas (2) des endlosen, gleichförmig bewegten Plattenbandes (1) angeordnet ist, so daß zwischen der Druckrolle (6) und dem Plattenband (1) ein einstellbarer Spalt (7) entsteht, in welchem die Zerkleinerung der auf dem Plattenband (1) befindlichen Gutschicht (5) erfolgt, und
- **daß** die Zerkleinerung unter Anwendung mittlerer bis hoher Drücke (6 bis 30 MPa) erfolgt dadurch

10. Vorrichtung nach Anspruch 9, **gekennzeichnet durch** einen Desagglomerator (8) mit einem Schlagrotor, der sich vorzugsweise um 90° versetzt in Drehrichtung des Antriebsturas (2) befindet.

11. Vorrichtung nach einem der Ansprüche 9 bis 10, **dadurch gekennzeichnet, daß** die als Plattenband (1) ausgebildete Beanspruchungsbahn durch eine oder mehrere Laschenketten (23) gezogen und über einen verzahnten oder unverzahnten Antriebsturas (2) angetrieben und durch eine Spannvorrichtung gespannt wird.

12. Vorrichtung nach einem der Ansprüche 9 bis 11, **dadurch gekennzeichnet, daß** die vorzugsweise auf einen Gummigurt (24) aufgelegten oder aufvulkanisierten Platten des Plattenbandes (1) mit den Laschenketten (23) lösbar verbunden sind.

13. Vorrichtung nach einem der Ansprüche 9 bis 12, **dadurch gekennzeichnet, daß** unter dem Untertrum des umlaufenden Plattenbandes ein Stetigförderer, vorzugsweise ein Panzerkettenförderer (28), angeordnet ist.

14. Vorrichtung nach einem der Ansprüche 9 bis 13, **dadurch gekennzeichnet, daß** die Zerkleinerungsvorrichtung von einem nichttragenden Gehäuse (29) umgeben ist, in welchem aufklappbare Bereiche als Zugang zum Plattenband (1), zur Druckrolle (6), zum Antriebs- (2) und Umlenkturas (3) und zum Desagglomerator (8) angeordnet sind.

15. Vorrichtung nach einem der Ansprüche 9 bis 14, **dadurch gekennzeichnet, daß** die Realisierung beliebig großer Produktionseinheiten modular durch die parallele, spiegelbildliche oder rotationssymmetrische Anordnung von bis zu vier Zerkleinerungsvorrichtungen erfolgt.

## Claims

1. Process for the fine crushing of mineral and non-mineral substances, preferably cement raw materials and cement clinker, the crushing taking place in the gap (7) developing between a continuous, evenly moved plate conveyor (1) and a pressure roller (6) arranged above the material layer (5) by single or repeated compressive-load application and the material-laden plate conveyor (1) being arranged horizontally or slightly inclined towards the pressure roller (6) **characterized in that**
- the plate conveyor (1) is continuously kept fed by a defined material layer (5) in metered manner;
- the material layer can be gravimetrically metered by changing the speed of the plate conveyor (1);
- the pressure roller (6) is elastically applied to the material layer (5) by hydropneumatic pressing forces and
- the fine crushing takes place using medium to high pressures (6 to 30 MPa).

2. Process according to claim 1, **characterized in that** the produced ground material is then disagglomerated, the disagglomeration of the produced ground material being carried out directly after the crushing procedure on the same device by a disagglomerator (8) preferably running in the opposite direction to the material-laden plate conveyor (1) and operated at a greater speed.

3. Process according to claim 1, **characterized in that** the final crushing is carried out in a downstream-connected tubular mill.

4. Process according to any one of claims 1 to 3, **characterized in that** the crushing of the material layer located on the moved plate conveyor (1) is carried out by several, e.g. two, pressure rollers connected in series in the direction of transport of the material and pressure rollers (6) elastically applied to the material layer (5) with preferably different pressure levels.

5. Process according to any one claims 1 and 4, **characterized in that** the speed of the plate conveyor (1) is continuously adjustable.

6. Process according to any one claims 1 to 5, **characterized in that** the feed of material to the plate conveyor (1) by generally fresh and recycled material preferably takes place via a feed bunker (4) which is either level-controlled from outside or fed from a silo located above it.

7. Process according to any one claims 1 to 6, **characterized in that** the pressure roller (6) applied to the moved material layer (5) preferably has no drive of its own and is pulled by the friction with the material layer (5).

8. Process according to any one claims 1 to 7, **characterized in that** the material layer (5) located on the moved plate conveyor (1) is precompressed and ventilated by one or more pressure rollers and then compacted by pressure roller (6).

9. Apparatus for carrying out the process according to any one of claims 1 to 8, with a continuous plate conveyor (1), evenly moved by means of a drive tumbler (2) and with a pressure roller (6) arranged above the material layer (5), the material-laden plate conveyor (1) being arranged horizontal- or slightly inclined towards the pressure roller (6), **characterized in that**
- a feed bunker (4) is provided for metered, continuous charging of the plate conveyor (1) with a defined material layer (5);
- the pressure roller (6) is elastically applied to the material layer (5) and is arranged vertically above the driver tumbler (2), developed in the form of a roller, of the continuous, evenly moved plate conveyor (1) so that an adjustable gap (7) forms between the pressure roller (6) and the plate conveyor (1), in which the material layer (5) located on the plate conveyor (1) is crushed, and
- the crushing takes place using medium to high pressures (6 to 30 MPa).

10. Apparatus according to claim 9, **characterized by** a disagglomerator (8) with a striking rotor which is preferably located offset by 90 degrees in the direction of rotation of the drive tumbler (2).

11. Apparatus according to any one of claims 9 to 10, **characterized in that** the load-application path developed as a plate conveyor (1) is pulled by one or more flat-link chains (23) and driven via a toothed or untoothed drive tumbler (2) and tensioned by a tensioning device.

12. Apparatus according to any one of claims 9 to 11, **characterized in that** the plates of the plate conveyor (1), which are preferably placed or vulcanized on a rubber belt (24), are detachably connected to the flat-link chains (23).

13. Apparatus according to any one of claims 9 to 12, **characterized in that** a continuous conveyor, preferably an armoured chain conveyor (28), is arranged under the lower track of the circulating plate conveyor.

14. Apparatus according to any one of claims 9 to 13, **characterized in that** the crushing device is enclosed by a non-load-bearing housing (29) in which sections which can be raised are arranged to give access to the plate conveyor (1), to the pressure roller (6), to the drive tumbler (2) and reversing tumbler (3) and to the disagglomerator (8).

15. Apparatus according to any one of claims 9 to 14, **characterized in that** the realization of production units of any desired size is carried out in modular manner through the parallel, mirror-image or rotation-symmetrical arrangement of up to four crushing devices.

## Revendications

1. Procédé de broyage fin de substances minérales et non minérales, de préférence des matières premières pour le ciment et du clinker, le broyage, qui a lieu dans la fente (7) se formant entre une bande à plaques sans fin (1) déplacée de manière uniforme et un rouleau presseur (6) disposé au-dessus d'une couche de matériau (5), étant obtenu par une contrainte de compression unique ou répétée et la bande à plaques (1) portant le matériau étant disposée à l'horizontale ou avec une légère inclinaison vers le rouleau presseur (6), **caractérisé**
- **en ce que** la bande à plaques (1) reçoit continuellement et de manière dosée une couche définie de matériau (5),
- **en ce que** la couche de matériau peut faire l'objet d'un dosage gravimétrique au moyen d'une modification de la vitesse de la bande à plaques (1),
- **en ce que** le rouleau presseur (6) est mis en contact souple avec la couche de matériau (5) par des efforts de pression hydropneumatiques et
- **en ce que** le broyage a lieu en utilisant des pressions moyennes à fortes (6 à 30 Mpa).

2. Procédé selon la revendication 1, **caractérisé en ce que** le matériau broyé qui est produit est ensuite désaggloméré, la désagglomération du matériau broyé qui est produit étant réalisée immédiatement après la procédure de broyage sur le même dispositif à l'aide d'un désagglomérateur (8) actionné de préférence en sens contraire par rapport à la bande à plaque (1) chargée de matériau et avec vitesse plus importante.

3. Procédé selon la revendication 1, **caractérisé en ce que** le broyage de finition a lieu dans un tube broyeur placé en aval.

4. Procédé selon l'une des revendications 1 à 3, **caractérisé en ce que** le broyage de la couche de matériau se trouvant sur la bande à plaques (1) en mouvement a lieu à l'aide de plusieurs, par exemple de deux, rouleaux presseurs (6) disposés l'un derrière l'autre en direction de transport du matériau et mis en contact souple avec la couche de matériau (5) par des efforts de pression de préférence différents.

5. Procédé selon les revendications 1 et 4, **caractérisé en ce que** la vitesse de la bande à plaques (1) est réglable en continu.

6. Procédé selon les revendications 1 à 5, **caractérisé en ce que** le chargement de la bande à plaques (1) avec du matériau, qui est normalement nouveau et recyclé, a lieu de préférence par l'intermédiaire d'une trémie de chargement (4), qui est alimentée soit par l'extérieur à l'aide d'une commande de remplissage soit à travers un silo disposé au-dessus.

7. Procédé selon les revendications 1 à 6, **caractérisé en ce que** le rouleau presseur (6) mis en contact avec la couche de matériau mise en mouvement (5) ne possède de préférence pas d'entraînement propre et est tracté par adhérence avec la couche de matériau (5).

8. Procédé selon les revendications 1 à 7 **caractérisé en ce que** la couche de matériau (5) se trouvant sur la bande à plaques mise en mouvement (1) fait l'objet d'une compression préliminaire et d'une désaération par un ou plusieurs rouleau(x) presseur(s) et est ensuite compactée par le rouleau presseur (6).

9. Dispositif pour la réalisation du procédé selon l'une des revendications 1 à 8, avec une bande à plaques sans fin (1) déplacée de manière uniforme au moyen d'un tourteau d'entraînement (2) et un rouleau presseur (6) disposé au-dessus de la couche de matériau (5), la bande à plaques (1) portant le matériau étant disposée à l'horizontale ou avec une légère inclinaison vers le rouleau presseur (6), **caractérisé**
- **en ce qu'**une trémie d'alimentation (4) est prévue pour une alimentation dosée et continue de la bande à plaques (1) avec une couche de matériau définie (5),
- **en ce que** le rouleau presseur (6) est mis en contact souple avec la couche de matériau (5) et est disposé à la verticale au-dessus du tourteau d'entraînement en forme de rouleau (2) de la bande à plaques sans fin (1) mise en mouvement de manière uniforme, une fente réglable (7), dans laquelle a lieu le broyage de la couche de matériau (5) se trouvant sur la bande à plaques (1), se formant ainsi entre le rouleau presseur (6) et la bande à plaque (1) et
- **en ce que** le broyage a lieu en utilisant des pressions moyennes à fortes (6 à 30 Mpa).

10. Dispositif selon la revendication 9, **caractérisé par** un désagglomérateur (8) avec un rotor de percussion, qui se trouve en direction de rotation du tourteau d'entraînement (2) avec de préférence un décalage de 90°.

11. Dispositif selon l'une des revendications 9 à 10, **caractérisé en ce que** le trajet de mise en contrainte conçu comme bande à plaques (1) est tiré par une ou plusieurs chaîne(s) à éclisses (23), est entraîné par un tourteau d'entraînement denté 'ou non denté (2) et est tendu par un dispositif de mise en tension.

12. Dispositif selon l'une des revendications 9 à 11, **caractérisé en ce que** les plaques de la bande à plaques (1) posées ou fixées par vulcanisation, de préférence sur un ruban en caoutchouc (24), sont reliées de manière amovible avec les chaînes à éclisses (23).

13. Dispositif selon l'une des revendications 9 à 12, **caractérisé en ce que** sous la section libre inférieure de la bande à plaques circulaire est disposé un convoyeur continu, de préférence un convoyeur à chaînes blindé (28).

14. Dispositif selon l'une des revendications 9 à 13, **caractérisé en ce que** le dispositif de broyage est entouré d'une enveloppe non porteuse (29), dans laquelle sont disposées des parties ouvrantes donnant accès à la bande à plaques (1), au rouleau presseur (6), au tourteau d'entraînement (2) et de renvoi (3) et au désagglomérateur (8).

15. Dispositif selon l'une des revendications 9 à 14, **caractérisé en ce que** la réalisation d'unités de production de n'importe quelle taille a lieu de manière modulaire au moyen de la disposition en parallèle, en symétrie par réflexion ou en symétrie de rotation de jusqu'à quatre dispositifs de broyage.
